# EUROPÄISCHE PATENTSCHRIFT

(11) **EP 0 378 099 B1**
(45) Veröffentlichungstag und Bekanntmachung des Hinweises auf die Patenterteilung: **30.03.1994**
(21) Anmeldenummer: 90100113.1
(22) Anmeldetag: 04.01.1990
(51) Int. Cl.: F23G 7/06, B01D 53/36, B01J 35/02

(54) **Anordnung zur katalytischen Nachverbrennung in Feuerstätten**
Arrangement for catalytic post-combustion for fireplaces
Arrangement de postcombustion catalytique pour foyers

(30) Priorität: 12.01.1989 DE 8900295 U
(43) Veröffentlichungstag der Anmeldung: 18.07.1990
(73) Patentinhaber: Horst, Günter, D-32052 Herford (DE)
(72) Erfinder: Horst, Günter, D-32052 Herford (DE)
(74) Vertreter: Busse & Busse Patentanwälte

(56) Entgegenhaltungen:
- WO-A-83/01673
- DE-A- 2 853 023
- DE-A- 3 446 342
- US-A- 4 643 862

## Beschreibung

Die Erfindung bezieht sich auf eine Anordnung zur katalytischen Nachverbrennung von Rauchgasen von Feuerstätten unter Verwendung einer Vielzahl von gleichmäßig in der Rauchgasströmung verteilt angeordneten Katalysatorkörpern.

Bei einer bekannten Anordnung dieser Art (DE-A-34 46 342) finden stabförmige Katalysatorkörper Verwendung, die eine radiale, horizontale Ausrichtung haben. Die Katalysatorkörper bestehen dabei aus Trägerelementen aus keramischem Material, die mit einem katalytisch wirkenden Material, beispielsweise Platin, beschichtet sind. Die Gesamtheit der Katalysatorkörper einer Nachverbrennungsvorrichtung ist von einem Gehäusemantel umgeben, der im Rauchgasabzug einer Feuerstätte fest angebracht wird und seinerseits ein Trägerelement für die Nachverbrennungsvorrichtung bildet. Die horizontal verlaufenden Katalysatorkörper, die in mehreren Ebenen übereinander angeordnet und dabei jeweils zueinander auf Lücke versetzt sind, setzen der Rauchgasströmung einen erheblichen Strömungswiderstand entgegen und erzwingen eine turbulente Strömung mit vielfachem Richtungswechsel. Dies beeinträchtigt den Wirkungsgrad der Nachverbrennung und beschränkt die Anwendbarkeit auf Feuerstätten mit starker Rauchgasströmung, die insbesondere bei Feuerstätten von Wohngebäuden wie Kaminen vielfach nicht gegeben ist. Zudem ist die bekannte Nachverbrennungsvorrichtung invariabel und daher für eine Nachrüstung weitgehend ungeeignet.

Dies gilt weitgehend auch für weitere Anordnungen bekannter Art, die Katalysatorkörper in Form einer zylindrischen Bienenwabe oder von Pellets (DE-A-33 02 702) oder von siebförmigen Elementen (WO 83/01613) aufweisen, die in einem Stapel übereinander angeordnet sind. Schließlich gilt dies auch für eine Nachverbrennungsvorrichtung mit einem einteiligen Katalysatorkörper, der mit strömungsparallelen Durchlässen versehen und in einem zylindrischen Ringträger abgestützt ist (US-A-4 770 158).

Der Erfindung liegt die Aufgabe zugrunde, eine Anordnung zur katalytischen Nachverbrennung zu schaffen, die eine einfache und wirksame Reduzierung des CO-Gehaltes im Rauchgas ermöglichen und nicht nur für eine Erstausrüstung von Feuerstätten, wie sie insbesondere als Kamine im allgemeinen in Wohngebäuden Anwendung finden, sondern auch für eine Nachrüstung von bereits im Betrieb befindlichen Feuerstätten geeignet ist.

Die Anordnung nach der Erfindung löst diese Aufgabe mit den Merkmalen des Patentanspruchs 1. Hinsichtlich wesentlicher weiterer Ausgestaltungen wird auf die Patentansprüche 2 bis 13 verwiesen.

Die erfindungsgemäße Anordnung zur katalytischen Nachverbrennung trägt den besonderen Verhältnissen in Feuerstätten wie Kaminen Rechnung, in denen im allgemeinen Rauchgasströmungen mit niedrigen Strömungsgeschwindigkeiten vorliegen, bei denen schon geringfügige Beeinträchtigungen Funktionsstörungen im Rauchgasabzug hervorrufen. Die entlang ihrer Außenfläche frei umströmbaren, diskret aufgehängten Katalysatorkörper erfahren im Feuerungsbetrieb eine Erwärmung auf etwa 320° und darüber und bewirken eine wirksame katalytische Nachverbrennung von im Rauchgas enthaltenem Kohlenmonoxyd zu Kohlendioxyd. Die Anordnung ist schnell und einfach, auch nachträglich, in den Rauchgastrichter oder -dom einer Feuerstätte einsetz- oder auf diesen aufsetzbar, wobei die Zahl und die Verteilung der Katalysatorkörper leicht an die besonderen Platz- und Strömungsverhältnisse der jeweiligen Feuerstätte angepaßt werden können. Das Trägergestell erlaubt das Einhängen von Katalysatorkörpern in vertikaler und/oder nach außen schräggestellter, gewissermaßen glockenförmiger Ausrichtung und dabei in einer Anzahl, die auch bei geringem Zug und dementsprechend schwacher Strömung eine einwandfreie Rauchgaspassage und einen ordnungsgemäßen Rauchgasabzug gewährleistet. Dies wird durch die Ausbildung der Katalysatorkörper als Stäbe mit angespitztem unteren, dem Brennraum bzw. der Feuerstelle zugewandten Ende unterstützt, die zugleich baulich besonders leicht und preisgünstig zu verwirklichen und strömungstechnisch besonders günstig ist, da sie ein vollständig oder überwiegend laminares Umströmen der Katalysatorkörper erlaubt und Beeinträchtigungen der Rauchgasströmung auch bei schwachen Strömungsverhältnissen auf einem Mindestmaß hält.

Ein Ausführungsbeisiel des Gegenstands der Erfindung ist in der Zeichnung näher veranschaulicht. In der Zeichnung zeigen:
- Fig. 1: eine perspektivische Ansicht einer Nachverbrennungsanordnung nach der Erfindung,
- Fig. 2: eine abgebrochene Teilansicht zu Fig. 1,
- Fig. 3: eine Seitenansicht eines erfindungsgemäßen Katalysatorstabes aus zwei um 90° versetzten Blickrichtungen,
- Fig. 4: eine abgebrochene perspektivische Ansicht einer abgewandelten Ausführungsform einer Nachverbrennungsanordnung nach der Erfindung,
- Fig. 5: eine schematische Frontansicht des Gehäuses der Nachverbrennungsanordnung nach Fig. 4 in starker Verkleinerung, und
- Fig. 6: eine Seitenansicht zu Fig. 5.

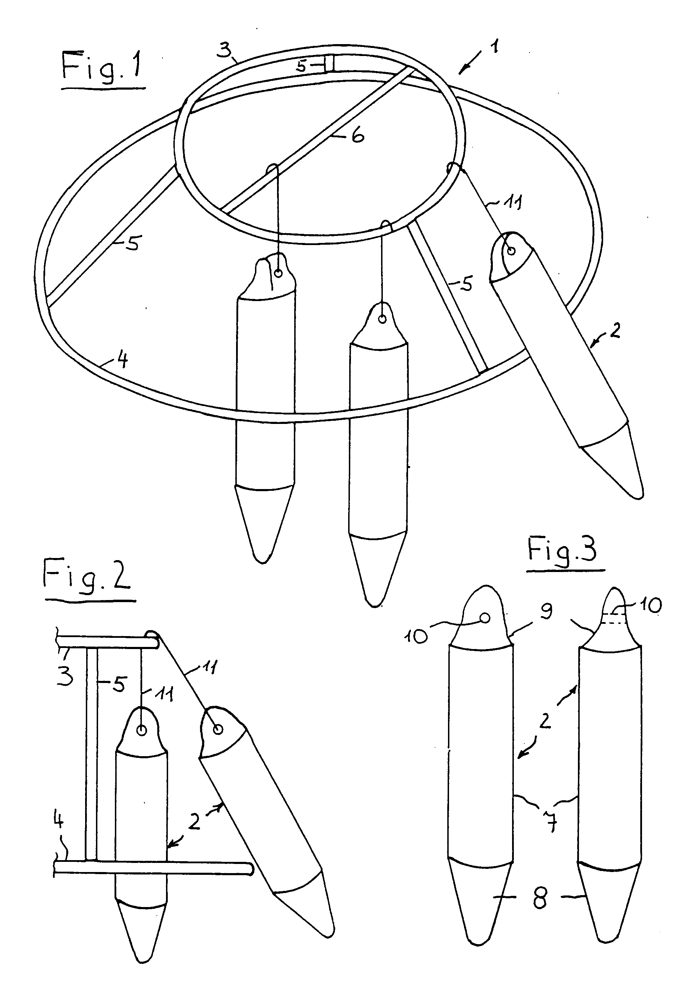

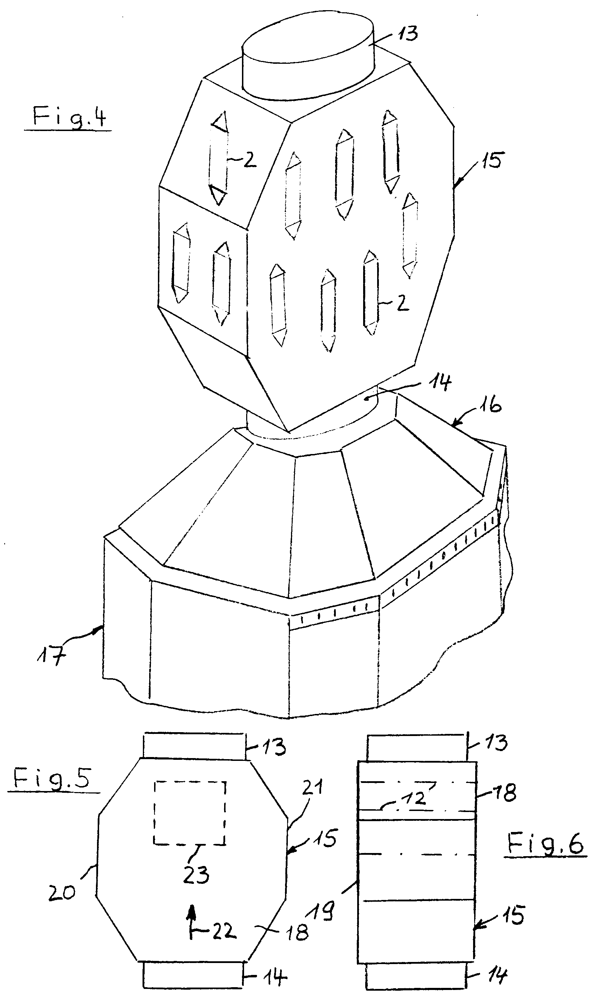

Die in der Zeichnung gemäß Fig. 1 bis 3 veranschaulichte Nachverbrennungsanordnung für Kamine oder kaminähnliche Feuerstätten für Festbrennstoffe, insbesondere Kaminholz, findet eine zentrale Anbringung im Rauchgasdom oder -trichter eines Kamins, eines Kamineinsatzes od.dgl., z.B. im Rauchgasdom 16 eines Kamins 17 gemäß Fig. 4, wobei sie in dem Rauchgasdom 16 frei aufgehängt oder auf wandseitigen Auflagern abgestützt wird. Sie kann als Ganzes leicht und schnell in den Kamin eingesetzt und zu Wartungs- oder Instandsetzungsarbeiten oder zum Zwecke eines vollständigen Austausches aus diesem ausgebaut werden.

Im einzelnen umfaßt die Anordnung einen Träger 1 bestehend aus Trägerstreben, die bei der Ausführung nach Fig. 1 und 2 ein korbähnliches, sich abwärts trichter- oder kegelförmig erweiterndes Gestell bilden. Im einzelnen umfaßt der Träger 1 eine obere Ringstrebe 3 und eine parallel im Abstand darunter angeordnete untere Ringstrebe 4, die mit der oberen Ringstrebe 3 durch in Draufsicht radial ausgerichtete und in Seitenansicht konisch angestellte Verbindungsstreben 5 verbunden sind. Die untere Ringstrebe 4 weist einen Durchmesser auf, der nicht unerheblich größer ist als jener der oberen Ringstrebe 3, die von einer Querstrebe 6 durchsetzt ist. Diese ist bei den dargestellten Beispiel nach Fig. 1 diametral angeordnet, und parallel oder auch kreuzend zu dieser können weitere solcher Streben vorgesehen sein. Die Trägerstreben können aus keramischem Material bestehen, jedoch ist metallisches Material, z.B. VA-Draht, bevorzugt.

An den Trägerstäben sind Katalysatorkörper 2 aufhängbar, die bei dem dargestellten Beispiel nach Fig. 1 bis 3 als Stäbe 7 ausgebildet sind, die ein in Betriebsstellung unteres, sich verjüngendes, angestromtes Ende 8 und ein oberes Aufhängungsende 9 aufweisen, das abgeflacht oder sich verjüngend ausgebildet sein kann, mit einer Querbohrung 10 versehen und mit einem Aufhängehaken 11 verbunden ist. Auch ein derartiger Aufhängehaken 11 besteht bevorzugt aus VA-Draht.

Die Katalysatorstäbe 7 können in ihrem Hauptteil einen kreisförmigen Querschnitt aufweisen, wie das dargestellt ist, statt dessen aber auch einen annähernd quadratischen oder vieleckigen oder sternförmigen Querschnitt aufweisen. In letzteren Fällen sind die Kanten der Stäbe vorzugsweise abgerundet.

Die Katalysatorstäbe 7 haben einen Durchmesser bzw. eine Hauptquerschnittsabmessung von etwa 10-30 mm und dabei eine Länge von etwa 100-200 mm. Das Verjüngungsende 8 ist bevorzugt als bleistiftartige Anspitzung ausgebildet, wie dies auch der Zeichnung entnommen werden kann.

Die Katalysatorkörper 2 können an der oberen Ringstrebe 3 und an diese durchsetzende Querstreben 6 mittels der Aufhängehaken 11 aufgehängt werden, und zwar sowohl in vertikaler Ausrichtung, als auch in einer nach unten außen ausgestellten Schrägstellung, die durch die untere Ringstrebe 4 erzeugt wird. Bevorzugt finden 20-40 derartiger Katalysatorkörper 2 Anwendung bei einer im Rauchgasdom oder -trichter 16 erfolgenden Anordnung der Nachverbrennungsvorrichtung. Die Zahl und die Anordnung der Katalysatorkörper 2 richtet sich dabei nach den jeweiligen Platz- und Strömungsverhältnissen im Kamin.

Die Fig. 4 veranschaulicht eine abgewandelte Ausführung der erfindungsgemäßen Anordnung die ein Gehäuse 15 mit einander gegenüberliegenden Rohranschlußbunden 13,14, im Gehäuse angeordnete und abgestützte gerade Trägerstreben 12 und an diesen aufgehängte Katalysatorkörper 2 einer der vorbeschriebenen Ausbildungen umfaßt. Diese Ausführung bildet dabei einen dem Rauchgasdom oder -trichter 16 des Kamins 17 bzw. eines Kamineinsatzes nachgeordneten externen Nachbrenner, der anstelle der Anordnung gemäß Fig. 1 und 2 im Rauchgasdom oder -trichter 16 oder bevorzugt zusätzlich zu einer derart angeordneten Nachverbrennungsvorrichtung Verwendung findet.

Bei Anbringung einer Anordnung im Rauchgasdom oder -trichter 16 eines Kamins 17 in Gestalt einer Einsatzglocke gemäß Fig. 1 und 2 erhöht sich die Temperatur im Brennraum auf Werte von 400°C und darüber, so daß die Rauchgastemperatur bei Verlassen des Rauchgasdoms oder -trichters 16 noch eine Temperatur aufweist, die für eine katalytische Nachverbrennung geeignet ist. Eine weitere Nachverbrennung geht zugleich mit der gewünschten Folge einher, daß die Abgastemperatur beim Übergang in einen Schornstein auf einen deutlich herabgesetzten Wert erniedrigt ist. Die Baueinheit 12,13,14,15 mit den in ihr abgestützten Katalysatorkörpern 2 bildet daher zugleich eine Art Nachkühler, der vorteilhaft zur Erhöhung des Wärmewirkungsgrades herangezogen werden kann.

Das Gehäuse 15 hat einen gegenüber dem Querschnitt der untereinander gleichen Rohranschlußbunde 13,14 vergrößerten Querschnitt, so daß sich die Geschwindigkeit der Rauchgasströmung im Hauptteil des Gehäuses erniedrigt und die Verweildauer erhöht. Bevorzugt ist dabei das Gehäuse 15 im wesentlichen von zueinander parallelen Vorder- und Rückwänden 18,19 sowie von diese verbindenden Seitenwänden 20,21 begrenzt,welche in Strömungsrichtung 22 im unteren Bereich divergieren, im mittleren Bereich parallel verlaufen und im oberen Bereich konvergierend ausgebildet sind. Der Rückwand 19 ist eine mittels eines abnehmbaren Deckels verschließbare Zugangsöffnung 23 zugeordnet, die Reinigungsarbeiten sowie auch eine Inspektion und einen Austausch der Katalysatorkörper erlaubt.

## Patentansprüche

1. Anordnung zur katalytischen Nachverbrennung von Rauchgasen von Feuerstätten unter Verwendung einer Vielzahl von gleichmäßig in der Rauchgasströmung verteilt angeordneten Katalysatorkörpern, **dadurch gekennzeichnet,** daß im Brennraum oberhalb der Feuerstelle oder in einem dem Brennraum unmittelbar nachgeordneten Gehäuse ein Gestell aus metallischen oder keramischen Trägerstreben frei abgestützt oder aufgehängt ist und als Katalysatorkörper stabförmige Hängekörper vorgesehen sind, die mit ihrem oberen Ende an den Trägerstreben aufgehängt sind und in herabhängender, zur Rauchgasströmung parallel oder spitzwinklig ausgerichteter Betriebsstellung ein dem anströmenden Rauchgas zugewandtes, verjüngtes unteres Ende aufweisen.

2. Anordnung nach Anspruch 1, **dadurch gekennzeichnet,** daß die Hängekörper (2;7) an ihrem Aufhängungsende (9) einen herabgesetzten Querschnitt aufweisen.

3. Anordnung nach Anspruch 1 oder 2, **dadurch gekennzeichnet,** daß die Hängekörper (2;7) einen kreisförmigen Querschnitt aufweisen.

4. Anordnung nach Anspruch 1, **dadurch gekennzeichnet,** daß die Hängekörper (2;7) einen annähernd quadratischen oder vieleckigen oder sternförmigen Querschnitt mit abgerundeten Kanten aufweisen.

5. Anordnung nach einem oder mehreren der Ansprüche 1 bis 4, **dadurch gekennzeichnet,** daß die Hängekörper (2;7) einen Durchmesser bzw. eine Hauptquerschnittsabmessung von etwa 10-30 mm aufweisen.

6. Anordnung nach einem oder mehreren der Ansprüche 1 bis 5, **dadurch gekennzeichnet,** daß die Hängekörper (2;7) eine Länge von etwa 100-200 mm aufweisen.

7. Anordnung nach einem oder mehreren der Ansprüche 1 bis 6, **dadurch gekennzeichnet,** daß das verjüngte Ende (8) der Hängekörper (2;7) als bleistiftartige Anspitzung ausgebildet ist.

8. Anordnung nach einem oder mehreren der Ansprüche 1 bis 7, **dadurch gekennzeichnet,** daß das Aufhängungsende (9) der Hängekörper (2;7) abgeflacht mit einer Querbohrung (10) versehen und mit einem Aufhängehaken (11) verbunden ist.

9. Anordnung nach einem oder mehreren der Ansprüche 1 bis 8, **dadurch gekennzeichnet,** daß das Gestell eine obere Ringstrebe (3) und eine parallel im Abstand koaxial darunter angeordnete untere Ringstrebe (4) aufweist, die einen gegenüber der oberen Ringstrebe (3) größeren Durchmesser aufweist und mit diesem durch konisch schräggestellte, radial ausgerichtete Verbindungsstreben (5) verbunden sind, wobei die obere Ringstrebe (3) von zumindest einer Querstrebe (6) durchsetzt ist.

10. Anordnung nach einem oder mehreren der Ansprüche 1 bis 9, **dadurch gekennzeichnet,** daß die Trägerstreben (12) und die Hängekörper (2;7) in einem mit Rohranschlußbunden (13,14) versehenen gesonderten Gehäuse (15) untergebracht sind, das einen externen Nachbrenner bildet.

11. Anordnung nach Anspruch 10, **dadurch gekennzeichnet,** daß das Gehäuse (15) einen gegenüber dem Querschnitt der Rohranschlußbunde (13,14) vergrößerten Querschnitt aufweist.

12. Anordnung nach Anspruch 10 oder 11, **dadurch gekennzeichnet,** daß das Gehäuse (15) im wesentlichen von zueinander parallelen Vorder- und Rückwänden (18,19) sowie diese verbindenden Seitenwänden (20,21) begrenzt ist, welche in Strömungsrichtung (22) im unteren Bereich divergieren, im mittleren Bereich parallel verlaufen und im oberen Bereich konvergierend ausgebildet sind.

13. Anordnung nach einem oder mehreren der Ansprüche 10 bis 12, **dadurch gekennzeichnet,** daß die Trägerstreben als im Gehäuse (15) an den Vorder- und Rückwänden (18,19) abgestützte gerade Querstangen (12) ausgebildet sind und das Gehäuse (15) eine mittels eines abnehmbaren Deckels verschließbare Zugangsöffnung (23) aufweist.

## Claims

1. An arrangement for the catalytic secondary combustion of flue gases of fireplaces, using a plurality of catalysts disposed in an even distribution over the flow of flue gases, characterised in that a frame of metallic or ceramic supporting struts is freely supported or suspended in the combustion chamber above the fireplace or in a housing disposed directly downstream of the combustion chamber and in that rod-shaped suspended members are supplied as catalysts, their upper ends being suspended from the carrier struts and having in their downwardly suspended operating position, aligned parallel with or at an acute angle to the flow of flue gas, a tapered lower end which is towards the approaching flue gas.

2. An arrangement according to Claim 1, characterised in that the suspended members (2, 7) have a reduced cross-section at their suspension end (9).

3. An arrangement according to Claim 1 or 2, characterised in that the suspended members (2, 7) are of circular cross-section.

4. An arrangement according to Claim 1, characterised in that the suspended members (2, 7) have an approximately square or polygonal or stellate cross-section with rounded edges.

5. An arrangement according to one or more of Claims 1 to 4, characterised in that the suspended members (2, 7) have a diameter or a main cross-sectional dimension of approximately 10 - 30 mm.

6. An arrangement according to one or more of Claims 1 to 5, characterised in that the suspended members (2, 7) have a length of about 100 - 200 mm.

7. An arrangement according to one or more of Claims 1 to 6, characterised in that the tapered end (8) of the suspended members (2, 7) is constructed as a pointed pencil-like member.

8. An arrangement according to one or more of Claims 1 to 7, characterised in that the suspension end (9) of the suspended bodies (2, 7) is flattened and has a transverse bore (10) and is connected to a suspension hook (11).

9. An arrangement according to one or more of Claims 1 to 8, characterised in that the frame comprises an upper annular strut (3) and, disposed at a distance from and coaxial with a parallel lower annular strut (4) which in relation to the upper annular strut (3) is of larger diameter being connected to the latter by conically obliquely positioned and radially directed connecting struts (5), whereby the upper annular strut (3) is traversed by at least one transverse strut (6).

10. An arrangement according to one or more of Claims 1 to 9, characterised in that the carrier struts (12) and the suspended members (2, 7) are accommodated in a separate housing (15) provided with tubular connecting assemblies (13, 14), the housing (15) forming an external after-burner.

11. An arrangement according to Claim 10, characterised in that the housing (15) is of a cross-section which is greater than the cross-section of the tube connecting assembly (13, 14).

12. An arrangement according to Claim 10 or 11, characterised in that the housing (15) is substantially defined by mutually parallel front and rear walls (18, 19) and the side walls (20, 21) which connect these latter and which diverge in their bottom zone in the direction of flow (22), extend parallel in the middle zone and are constructed to diverge outwardly in their upper zone.

13. An arrangement according to one or more of Claims 10 to 12, characterised in that the carrier struts are constructed as straight transverse rods (12) supported on the front and rear walls (18, 19) in the housing (15), the housing (15) having an access aperture (23) adapted to be occluded by a removable cover.

## Revendications

1. Arrangement pour la postcombustion catalytique des gaz de combustion de foyers utilisant plusieurs corps catalyseurs répartis uniformément dans le flux de gaz de combustion, caractérisé en ce que, dans l'espace de combustion, au-dessus du foyer, ou dans un boîtier installé directement en aval de l'espace de combustion est disposé librement ou suspendu un bâti formé d'éléments de support métalliques ou céramiques et des corps à suspendre en forme de bâtons sont prévus comme corps catalyseurs, sont suspendus par leur extrémité supérieure aux éléments de support et présentent dans la position de fonctionnement suspendue orientée parallèlement au flux des gaz de combustion en formant un angle aigu avec ce dernier, une extrémité inférieure effilée tournée vers les gaz de combustion affluant.

2. Arrangement selon la revendication 1, caractérisé en ce que les corps à suspendre (2, 7) présentent à leur extrémité de suspension (9) une section transversale diminuée.

3. Arrangement selon la revendication 1 ou 2, caractérisé en ce que les corps à suspendre (2, 7) présentent une section transversale circulaire.

4. Arrangement selon la revendication 1, caractérisé en ce que les corps à suspendre (2, 7) présentent une section transversale pratiquement carrée, polygonale ou en forme d'étoile avec des arêtes arrondies.

5. Arrangement selon une ou plusieurs des revendications 1 à 4, caractérisé en ce que les corps à suspendre (2, 7) présentent un diamètre ou une dimension principale en coupe d'environ 10 à 30 mm.

6. Arrangement selon une ou plusieurs des revendications 1 à 5, caractérisé en ce que les corps à suspendre (2, 7) présentent une longueur d'environ 100 à 200 mm.

7. Arrangement selon une ou plusieurs des revendications 1 à 6, caractérisé en ce que l'extrémité effilée (8) des corps à suspendre (2, 7) est conçue comme une pointe de crayon.

8. Arrangement selon une ou plusieurs des revendications 1 à 7, caractérisé en ce que l'extrémité de suspension (9) des corps à suspendre (2, 7) est aplatie, percée d'une forure transversale (10) et fixée à l'aide d'un crochet à suspendre (11).

9. Arrangement selon une ou plusieurs des revendications 1 à 8, caractérisé en ce que le bâti comporte un élément circulaire supérieur (3) et un élément circulaire inférieur (4) placé parallèlement et coaxialement sous le premier présentant un diamètre supérieur à celui de l'élément circulaire supérieur (3) et relié à celui-ci par des montants de liaison (5) inclinés en forme de cône et orientés radialement, l'élement circulaire supérieur (3) étant traversé par au moins une entretoise (6).

10. Arrangement selon une ou plusieurs des revendications 1 à 9, caractérisé en ce que les éléments de support (12) et les corps à suspendre (2, 7) sont logés dans un boîtier séparé (15) pourvu de tubulures de raccordement (13, 14) et forment un dispositif de postcombustion externe.

11. Arrangement selon la revendication 10, caractérisé en ce que le boîtier (15) présente une section transversale plus grande que celle des tubulures de raccordement (13, 14).

12. Arrangement selon la revendication 10 ou 11, caractérisé en ce que le boitier (15) est essentiellement délimité par des parois antérieure et postérieure (18, 19) parallèles l'une à l'autre ainsi que par des parois latérales (20, 21) qui les relient et qui dans le sens du flux divergent dans leur zone inférieure, sont parallèles dans leur zone médiane, et convergent dans leur zone supérieure.

13. Arrangement selon une ou plusieurs revendications 10 à 12, caractérisé en ce que les éléments de support ont la forme d'entretoises droites (12) montées dans le boîtier (15) dans les parois antérieure et postérieure (18, 19) et le boîtier (15) présente un orifice d'accès (23) pouvant être fermé au moyen d'un couvercle amovible.
